**Europäisches Patentamt**

(19) **European Patent Office**

**Office européen des brevets**

(11) Veröffentlichungsnummer: **0 085 651**
**B1**

(12) # EUROPÄISCHE PATENTSCHRIFT

(45) Veröffentlichungstag der Patentschrift:
**20.03.85**

(51) Int. Cl.⁴: **H 04 L 9/02**

(21) Anmeldenummer: **83810027.9**

(22) Anmeldetag: **24.01.83**

(54) **Dechiffrierverfahren und -vorrichtung.**

(30) Priorität: **29.01.82 CH 558/82**
**02.04.82 CH 2046/82**

(43) Veröffentlichungstag der Anmeldung:
**10.08.83 Patentblatt 83/32**

(45) Bekanntmachung des Hinweises auf die Patenterteilung:
**20.03.85 Patentblatt 85/12**

(84) Benannte Vertragsstaaten:
**AT CH DE FR GB IT LI NL SE**

(56) Entgegenhaltungen:
**DE - C - 977 999**

(73) Patentinhaber: **GRETAG Aktiengesellschaft,
Althardstrasse 70, CH-8105 Regensdorf (CH)**

(72) Erfinder: **Mueller, Kurt Hugo, Dr., Höhenstrasse 15A,
CH-8304 Wallisellen (CH)**

(74) Vertreter: **Pirner, Wilhelm et al, Patentabteilung der
CIBA-GEIGY AG Postfach, CH-4002 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Dechiffrierverfahren und eine -vorrichtung der im Oberbegriff von Patentanspruch 1 bzw. 7 sowie 4 bzw. 8 beschriebenen Art.

Bei der Hochfrequenz-Nachrichtenübertragung ist oft ein sogenannter Broadcast-Betrieb üblich, wobei eine Leitstation eine bestimmte Meldung an eine Reihe von Empfängern übermittelt. Ein solcher Empfänger ist oft nicht in der Lage, bei gestörten oder nur bruchstückhaft empfangenen Meldungen durch Rückfrage eine Wiederholung anzufordern, z. B. weil er als reiner Empfänger gar nicht über eine Sendeeinrichtung verfügt oder aber, weil er aus taktischen Gründen die Funkstille nicht brechen darf.

Durch den Einsatz fehlerkorrigierender Codes lässt sich in solchen Fällen zwar die Übertragungssicherheit verbessern, doch verlangen viele dieser Codes — gerade die Blockcodes — eine Synchronisierung, die der Empfänger zuerst einmal einstellen muss. Dasselbe gilt bei der Chiffrierung, wo die sendenden und empfangenden Generatoren zunächst durch eine Anfangssynchronisation in Schritt gebracht werden müssen. Gelingt dies dem Empfänger nicht, so wird eine Dechiffrierung unmöglich. Der Empfänger muss dabei im allgemeinen zwei Informationen richtig empfangen: Kryptoinformation und Startzeit. Die erstere kann ein Zusatzschlüssel, verschlüsselter Spruchschlüssel oder ähnliches sein und bezweckt die automatische Änderung des Chiffrierprogamms für jede Übertragung; die zweite definiert den Startzeitpunkt und damit die Kryptosynchronisation. Kryptoinformation und Startzeit zusammen werden im allgemeinen als sogenannte Eintritts- oder Einphasungsinformation bezeichnet.

Entsprechend ihrer Wichtigkeit wird diese Eintritts- oder Einphasungsinformation zu Beginn der Meldung redundant übertragen, so dass eine Dechiffrierung trotz einer gewissen Zahl von Übertragungsfehlern noch möglich ist. Gerade bei HF-Übertragung ist aber selbst eine solche Sicherung noch unbefriedigend, da durch Schwund oder starke Störungen der Einphasungsinformation diese völlig verlorengehen kann; der Effekt ist dann der gleiche als würde der Empfänger zu spät eingeschaltet.

Ein wesentlich robusteres Verhalten erzielt man, falls die Einphasungsinformation während der Übertragung periodisch oder aperiodisch in gewissen Abständen wiederholt wird. Eine Realisierung eines solchen Verfahrens ist z. B. im Artikel „9EC755 Digital Voice Cipher System for Defense Applications" von G. Baltzer in „Philips Telecommunications Review", März 1981, beschrieben. Werden durch starke Störungen z. B. die ersten drei Aussendungen der Einphasungsinformation, die sog. Späteintrittspunkte oder *Late Entry*-Punkte, verpasst, so gelingt die Synchronisation evtl. das nächste Mal und es kann wenigstens der verbleibende Teil der Meldung dechiffriert werden. Ist der Synchronismus einmal erreicht, so gelingt es oft, diesen auch später bei Störungen zu halten, unter der Voraussetzung, dass die Generatoren auf Sende- und Empfangsseite kontinuierlich durchlaufen und die jeweilige Einphasungsinformation die momentane Stellung (in verschlüsselter Form) definiert. Dies gibt dem Empfänger auch die Möglichkeit, seinen korrekten Synchronismus bei jedem *Late Entry*-Punkt erneut zu überprüfen.

Der Nachteil dieses Systems ist evident: die bis zum Erreichen des Synchronismus eingetroffenen Nachrichtenteile können nicht dechiffriert werden und sind demnach verloren. Da vielfach, z. B. bei taktischen Meldungen, der korrekte Empfang jedes kleinsten Meldungsteils äusserst wichtig sein kann, ist dieser Nachteil oftmals besonders störend und schwerwiegend.

Zum Stand der Technik ist u. a. auch die DE-C Nr. 977999 bekannt. Diese offenbart ein Chiffriersystem, bei dem der Gleichlauf zwischen Sender und Empfänger mit Hilfe von in das Chiffrat eingefügten Synchronzeichen sichergestellt wird. Empfangsseitig wird dabei das Chiffrat zwecks Ausgleichs von allfälligen Gleichlauffehlern kurzzeitig zwischengespeichert. Bis zum Erreichen des Synchronismus eingetroffene Nachrichtenteile können aber auch bei diesem System nicht dechiffriert werden.

Durch die Erfindung soll nun der einleitend diskutierte Mangel bekannter Dechiffriersysteme behoben und insbesondere ein Dechiffrierverfahren und eine entsprechende Vorrichtung der eingangs definierten Art dahingehend verbessert werden, dass die Dechiffrierung im wesentlichen aller empfangenen Nachrichtenteile unabhängig vom Einphasungszeitpunkt möglich wird.

Das erfindungsgemässe Verfahren und die erfindungsgemässe Vorrichtung sind in den unabhängigen Patentansprüchen beschrieben. Vorteilhafte Ausgestaltungen ergeben sich aus den abhängigen Ansprüchen.

Der Zustand eines Chiffrier/Dechiffriergenerators ist bekanntlich durch seinen Zustandsvektor festgelegt; daneben gibt es natürlich noch weitere Freiheitsgrade, welche den Algorithmus definieren und als geheime Schlüsselinformation benützt werden können. Mindestens Teile des Zustandsvektors ändern sich beim Fortschalten der Generatoren. Diesen Zustandsvektor gilt es nun anhand der während der *Late Entry*-Zeitpunkte übertragenen Information in Übereinstimmung zu bringen. Für die Dechiffrierung der vor der erfolgreichen Einphasung übertragenen Information kann gemäss der Erfindung auf zwei Arten vorgegangen werden:

a) Beim Empfang einer Sendung werden — auch wenn die Einphasungsinformation nicht erhalten wird — alle ankommenden Daten abgespeichert. Ausgelöst kann dies z. B. durch den Empfang des Trägersignals auf der spezifischen Frequenz werden. Sobald die Einphasung gelingt, wird normal dechiffriert, wobei diese erste Einphasungsinformation gespeichert bleibt. Am Schluss der Übertragung wird — ausgehend von dieser Einphasungsinformation — der früher nicht dechiffrierbare Anfangsteil der Meldung dechiffriert. Dies geschieht, indem der Dechiffriergenerator vom Einphasungszeitpunkt ausgehend rückwärts laufengelassen wird und das zuvor abgespeicherte Chiffrat parallel dazu Bit um Bit rückwärts aus dem Speicher abgerufen wird. Für die Rückwärts-Dechiffrierung ist erforderlich, dass beim verwendeten Algorithmus aus einem gegebenen Zustandsvektor wahlweise der folgende oder der vorangehende mit vergleichbarem Rechenaufwand bestimmt werden kann. Wie solche Zustände definiert und übertragen werden können, ist z. B. in EP-A Nr. 0027853 oder DE-A Nr. 2943726 beschrieben.

b) Aus der richtig empfangenen Einphasungsinformation werden Zeitpunkt und Einphasungsinformation früherer Eintrittszeitpunkte bestimmt. Damit kann von dort aus in Vorwärtsrichtung dechiffriert werden. Voraussetzung dafür ist natürlich, dass der Zusammenhang zwischen den verschiedenen Einphasungsinformationen bekannt ist.

In beiden Fällen sind verschiedene Varianten möglich:

— Beim Empfang dechiffrierter Texte wird sofort ausgedruckt; der fehlende Anfang wird am Schluss angehängt. Da somit nur der Chiffratanfang gespeichert werden muss, wird hier nur wenig Speicherplatz benötigt.

— Der gesamte Text wird (chiffriert oder klar) gespeichert, die fehlenden Teile nach der erfindungsgemässen Dechiffrierung noch im Speicher ergänzt und der Text erst dann als Ganzes ausgedruckt: Bei dieser Variante muss der Speicher für die ganze Meldung ausgelegt werden.

— Durch eine Art *Multitasking*-Betrieb können während dem Empfang frühere Lücken komplettiert werden, so dass mit dem Ausdrucken (und Entlasten des Speichers) noch während des Empfangens weiteren Chiffrats begonnen werden kann.

Im folgenden wird die Erfindung anhand der Zeichnung näher erläutert. Es zeigen:

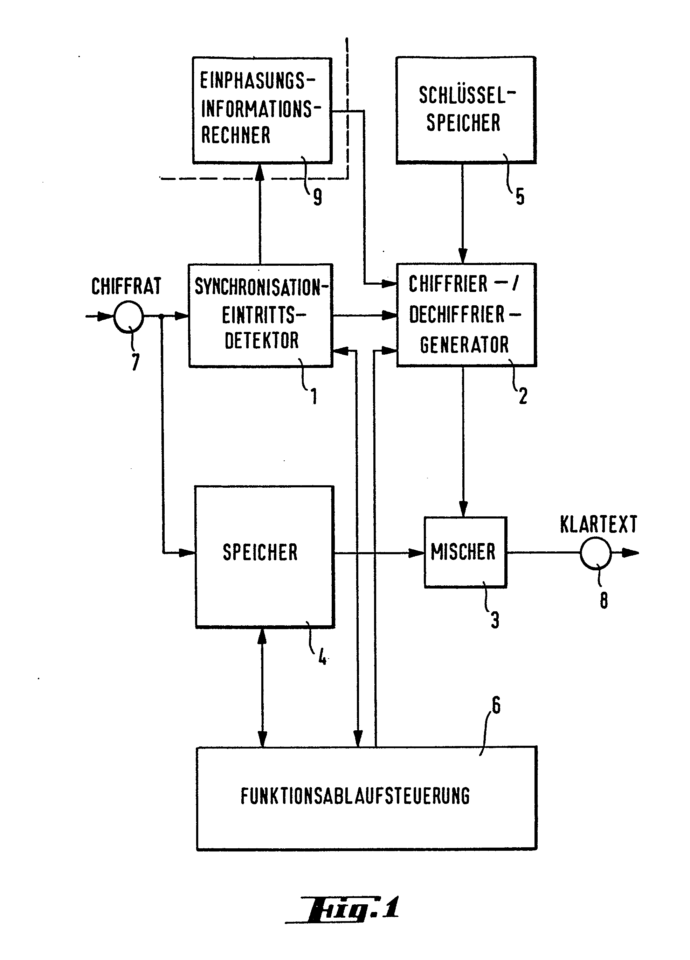

Fig. 1 ein stark vereinfachtes Blockschaltschema eines Ausführungsbeispiels der erfindungsgemässen Dechiffriervorrichtung,

Fig. 2 ein Prinzipschema eines vor- und rückwärts betreibbaren Chiffriergenerators, und

Fig. 3 ein Flussdiagramm eines erfindungsgemässen Verfahrensablaufs.

Die Vorrichtung umfasst, neben zahlreichen anderen, für die vorliegende Erfindung irrelevanten Teilen, einen Synchronisations- und Eintrittsdetektor 1, einen Chiffrier/Dechiffriergenerator 2, ein Verknüpfungsglied in Form eines Modulo-2-Mischers 3, einen Arbeitsspeicher 4, einen Schlüsselspeicher 5 und eine Funktionsablaufsteuerung 6 sowie einen Chiffrateingang 7 und einen Klartextausgang 8. Ferner ist noch, als eine Variante, ein Einphasungsinformationsrechner 9 vorgesehen. Die einzelnen Teile sind natürlich, wie bei modernen Geräten dieser Art üblich, weitestgehend durch ein Mikrocomputersystem und entsprechende Programmierung desselben realisiert.

Das Chiffrat wird vom Übertragungsbeginn weg dem Detektor 1 zugeführt und gleichzeitig im Speicher 4 abgespeichert. Sobald der Detektor 1 eine Einphasungsinformation störungsfrei empfängt, veranlasst er in üblicher Weise im Zusammenwirken mit der Funktionsablaufsteuerung 6 die Initialisierung des Chiffrier/Dechiffriergenerators 2, d. h. die Festlegung von dessen Zustandsvektor, worauf dieser mit der Erzeugung der für den Dechiffriervorgang notwendigen Schlüsselimpulsfolge beginnt. Der Generator 2 läuft dabei vorwärts, d. h. in derselben Richtung wie der senderseitige Generator. Die so erzeugte Schlüsselimpulsfolge wird dann in bekannter Weise mit dem weiter eintreffenden Chiffrat im Mischer 3 modulo-2-verknüpft und dadurch dechiffriert.

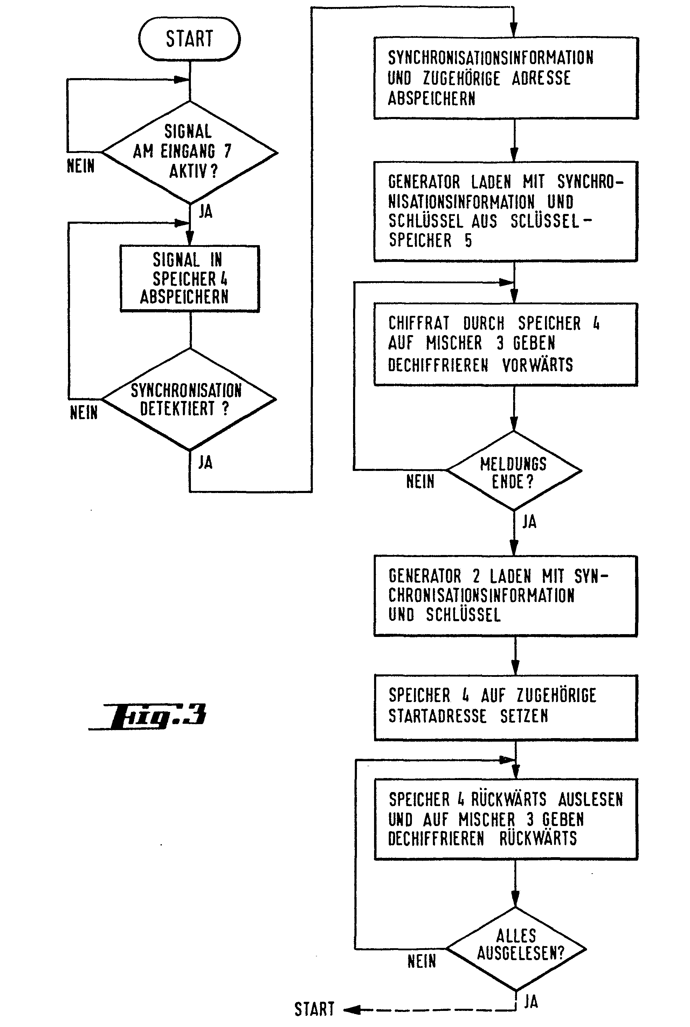

Wenn nun die Übertragung der Nachricht beendet ist, veranlasst die Funktionsablaufsteuerung 6, dass der Chiffrier/Dechiffriergenerator 2 in denjenigen Anfangszustand, auf den er bei der Einphasung gesetzt worden war, zurückgesetzt wird und von dort in umgekehrter Richtung, also rückwärts, weiterläuft. Er erzeugt dann dabei eine Schlüsselimpulsfolge, die bis auf die zeitliche Umkehrung genau derjenigen entspricht, die vom sendeseitigen Chiffriergenerator vor der gelungenen Einphasung erzeugt worden ist. Mit dieser gewissermassen in die Vergangenheit zurücklaufenden Schlüsselimpulsfolge wird nun der vor der Einphasung empfangene Chiffratteil dechiffriert, indem dieser in zeitlich umgekehrter Reihenfolge aus dem Speicher 4 ausgelesen und mit der Schlüsselimpulsfolge gemischt wird. Der so dechiffrierte Anfangsteil der Nachricht wird dann einfach an den Rest der dechiffrierten Nachricht angehängt. In Fig. 3 ist dieser Verfahrensablauf nochmals in Form eines Flussdiagramms übersichtlich dargestellt.

Wie schon früher erwähnt, kann der Klartext natürlich auch so lange gespeichert werden, bis alle Teile des Chiffrats vollständig dechiffriert sind, und erst dann gesamthaft in der richtigen Reihenfolge ausgegeben werden. Ferner ist es natürlich auch möglich, die Dechiffrierung von vor einer Einphasung liegenden Nachrichtenabschnitten auch zwischendurch, z.B. also immer dann, wenn der Rechner gerade nicht mit anderen Aufgaben beschäftigt ist, vorzunehem. Diesbezüglich unterliegt die Erfindung keinerlei Einschränkungen.

Der Synchronisation- und Eintrittsdetektor 1 ist von konventioneller Bauart, beispielsweise etwa entsprechend dem im Chiffriersystem CG 505 der Anmelderin verwendeten Detektor. Der Chiffrier/Dechiffriergenerator 2 muss natürlich ein Typ sein, der in beiden Richtungen betreibbar ist. Die meisten der heute üblichen, auf der Basis von rückgekoppelten Schieberegistern arbeitenden Generatoren sind für diesen Zweck einsetzbar oder zumindest in für den Fachmann geläufiger Weise entsprechend adaptierbar.

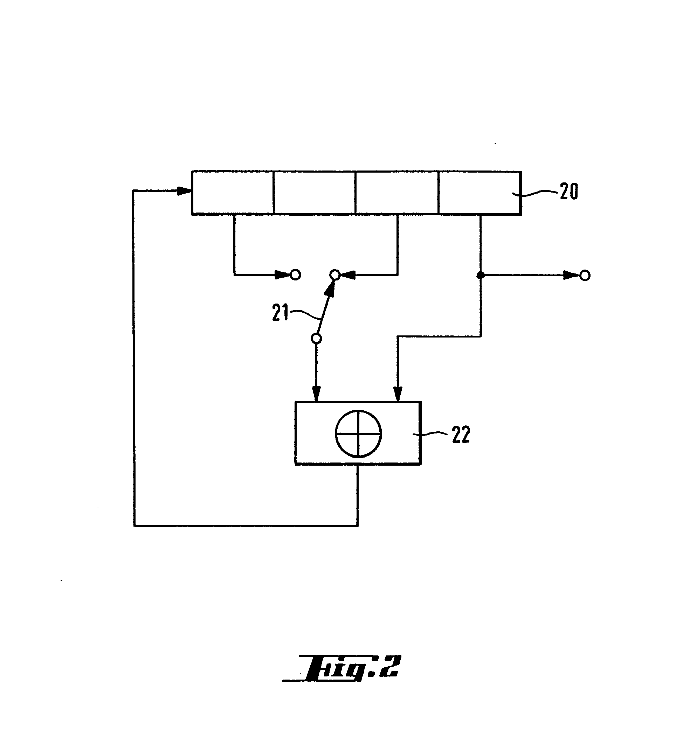

Ein Prinzipbeispiel eines solchen Chiffriergenerators ist in Fig. 2 dargestellt. Er umfasst ein vierstufiges Schieberegister 21, einen Umschalter 22 und ein Exklusiv-ODER-Gatter 22. Für den Vorwärtsbetrieb sind die vierte und die dritte Registerstufe über das Gatter auf den Eingang zurückgeführt, für den Rückwärtsbetrieb sind dies die vierte und die erste Stufe.

Weitere Beispiele für derartige zweiseitig betreibbare Chiffriergeneratoren sind z. B. in F.J. Furrer: „Fehlerkorrigierende Blockkodierung für die Datenübertragung" Kap. 8, Birkhäuser Verlag, Basel 1981, und V.S. Pless: „Encryption Scheme für Computer Confidentiality", „IEEG Transactions on Computers", vol. C-26, Nr. 11, Nov. 1977, S. 1133-1136, beschrieben. Alle übrigen Teile der Vorrichtung sind, wie schon erwähnt, Standardbestandteile eines Mikroprozessorsystems bzw. Softwareroutinen, für die der Fachmann keiner Erläuterung bedarf. Selbstverständlich kann auch der Chiffriergenerator teilweise oder ganz softwaremässig implementiert sein.

Wie schon weiter vorne erläutert, kann anstelle der Rückwärtsdechiffrierung auch so vorgegangen werden, dass aus derjenigen Einphasungsinformation, bei der die Einphasung gelungen ist, auf die zeitlich davor liegende(n) zurückgerechnet wird und der Chiffrier/Dechiffriergenerator 2 dann entsprechend mit dieser so errechneten Information gesetzt und das (gespeicherte) Chiffrat dann ganz normal vorwärts dechiffriert wird. Voraussetzung dafür ist einerseits, dass die fehlenden bzw. verstümmelten Meldungsteile keinen Bitslip verursacht haben (abgespeicherte Bits können zwar falsch sein, ihre Anzahl muss aber stimmen), und andererseits, dass die aufeinanderfolgenden Einphasungsinformationen nicht willkürlich sind, sondern nach einem empfangsseitig bekannten Bildungsgesetz voneinander abhängen, was bei einigen bekannten Chiffrier/Dechiffriersystemen der Fall ist. Die Berechnung der früheren Einphasungsinformationen erfolgt im Einphasungsinformationsrechner 9, der selbstverständlich ebenfalls keine selbständige Einheit darstellt, sondern als Software realisiert ist.

**Patentansprüche**

1. Dechiffrierverfahren, bei dem aus dem eingangsseitig zugeführten Chiffrat eine darin in zeitlichen Abständen erhaltene Einphasungsinformation detektiert und ein Chiffrier/Dechiffriergenerator (2) auf einen durch diese Information bestimmten Anfangszustand gesetzt wird und wobei dann das Chiffrat vom störungsfreien Erkennen der Einphasungsinformation weg mit einer vom so gesetzten Chiffrier/Dechiffriergenerator (2) im Vorwärtsbetrieb erzeugten Schlüsselimpulsfolge gemischt und dadurch dechiffriert wird, dadurch gekennzeichnet, dass das Chiffrat von Anfang an zumindest bis zum erstmaligen sicheren Detektieren einer Einphasungsinformation zwischengespeichert wird, dass der Chiffrier/Dechiffriergenerator (2) vom durch diese Einphasungsinformation bestimmten Anfangszustand an rückwärts betrieben wird und dass das zwischengespeicherte Chiffrat in umgekehrter Richtung aus dem Zwischenspeicher (4) abgerufen und mit der vom rückwärts laufenden Chiffrier/Dechiffriergenerator (2) erzeugten Schlüsselimpulsfolge gemischt und dadurch dechiffriert wird.

2. Verfahren nach Anspruch 1, dadurch gekennzeichnet, dass die Dechiffrierung mit rückwärts laufendem Chiffrier/Dechiffriergenerator (2) im Anschluss an die normale Vorwärtsdechiffrierung der nach der Einphasung empfangenen Chiffratteile erfolgt.

3. Verfahren nach Anspruch 1, dadurch gekennzeichnet, dass die Dechiffrierung mit rückwärts laufendem Chiffrier/Dechiffriergenerator (2) während der normalen Vorwärtsdechiffrierung erfolgt.

4. Dechiffrierverfahren, bei dem aus dem eingangsseitig zugeführten Chiffrat eine darin in zeitlichen Abständen enthaltene Einphasungsinformation detektiert und ein Chiffrier/Dechiffriergenerator (2) auf einen durch diese Information bestimmtn Anfangszustand gesetzt wird, und wobei dann das Chiffrat vom störungsfreien Erkennen der Einphasungsinformation weg mit einer vom so gesetzten Chiffrier/Dechiffriergenerator (2) erzeugten Schlüsselimpulsfolge gemischt und dadurch dechiffriert wird, dadurch gekennzeichnet, dass das Chiffrat vom Anfang an zumindest bis zum erstmaligen sicheren Detektieren einer Einphasungsinformation zwischengespeichert wird, dass aus dieser Einphasungsinformation auf eine frühere Einphasungsinformation zu Beginn der Nachrichtenübermittlung zurückgerechnet wird, dass der Chiffrier/Dechiffriergenerator (2) auf den durch diese frühere Einphasungsinformation bestimmten Anfangszustand gesetzt und von diesem weg betrieben wird, und dass das zwischengespeicherte Chiffrat dann mit der vom so gesetzten Chiffrier/Dechiffriergenerator (2) erzeugten Schlüsselimpulsfolge gemischt und dadurch dechiffriert wird.

5. Verfahren nach Anspruch 4, dadurch gekennzeichnet, dass das gesamte Chiffrat zwischengespeichert wird, bis die frühere Einphasungsinformation bestimmt und der Chiffrier/Dechiffriergenerator (2) entsprechend gesetzt ist.

6. Verfahren nach Anspruch 4, dadurch gekennzeichnet, dass die Dechiffrierung der vor der Einphasung ankommenden Chiffratteile im Anschluss an die normale Dechiffrierung der nach der Einphasung ankommenden Chiffratteile erfolgt.

7. Dechiffriervorrichtung zur Durchführung des Verfahrens nach einem der Ansprüche 1 bis 3, mit einem Chiffrateingang (7), einem an diesen angeschlossenen Synchronisations- und Eintrittsdetektor (1), einem Chiffrier/Dechiffriergenerator (2) mit zugeordnetem Chiffrierschlüsselspeicher (5), einem Mischer (3) für das Chiffrat mit einer vom Generator (2) erzeugten Schlüsselimpulsfolge, einer zentralen, alle diese Teile verbindenden und steuernden Funktionsablaufsteuerung (6) und einem Klartextausgang (8), wobei der Chiffrier/Dechiffriergenerator (2) auf einen durch eine vom Detektor (1) erkannte Einphasungsinformation bestimmten Anfangszustand setzbar ist, dadurch gekennzeichnet, dass ein Speicher (4) für wenigstens einen Teil des Chiffrats vorgesehen ist und dass der Chiffrier/Dechiffriergenerator (2) sowohl zum Vorwärts- als auch zum Rückwärtsbetrieb ausgebildet ist, und dass die Funktionsablaufsteuerung (6) ferner dazu eingerichtet ist, das Chiffrat aus dem Speicher (4) in zur Einspeicherreihenfolge umgekehrter Reihenfolge abzurufen und zusammen mit der vom rückwärts laufenden Chiffrier/Dechiffriergenerator (2) erzeugten Schlüsselimpulsfolge dem Mischer (3) zuzuführen.

8. Dechiffriervorrichtung zur Durchführung des Verfahrens nach einem der Ansprüche 4 bis 6, mit einem Chiffrateingang (7), einem an diesen angeschlossenen Synchronisations- und Eintrittsdetektor (1), einem Chiffrier/Dechiffriergenerator (2) mit zugeordnetem Chiffrierschlüsselspeicher (5), einem Mischer (3) für das Chiffrat mit einer vom Generator (2) erzeugten Schlüsselimpulsfolge, einer zentralen, alle diese Teile verbindenden und steuernden Funktionsablaufsteuerung (6) und einem Klartextausgang (8), wobei der Chiffrier/Dechiffriergenerator (2) auf einen durch eine vom Detektor (1) erkannte Einphasungsinformation bestimmten Anfangszustand setzbar ist, dadurch gekennzeichnet, dass ein Speicher (4) für wenigstens einen Teil des Chiffrats sowie ein Einphasungsinformationsrechner (9) vorgesehen sind, welch letzterer aus einer vom Synchronisations- und Eintrittsdetektor (1) erkannten Einphasungsinformation auf eine davon abhängige, zeitlich frührere Einphasungsinformation zurückrechnen kann, und dass die Funktionsablaufsteuerung (6) dazu ausgebildet ist, den Chiffrier/Dechiffriergenerator (2) auf einen durch diese frühere Einphasungsinformation bestimmten Anfangszustand zu setzen, um das im Speicher (4) zwischengespeicherte Chiffrat mit der vom so gesetzten Generator (2) erzeugten Schlüsselimpulsfolge zu mischen und zu dechiffrieren.

## Claims

1. Decoding process, wherein phase-in information contained in an inputted cipher text in spaced-apart time intervals is detected and a coding/decoding generator (2) is set to an initial state determined by said information, and whereby, beginning with the detection of the phase-in information without interference, the cipher text is intermixed with a key pulse sequence generated by the coding/decoding generator (2) set in the afore-mentioned manner, and operating forwardly, and is thereby decoded, characterized in that the cipher text is intermediately stored from the beginning to at least the first secure detection of the phase-in information, that the coding/decoding generator (2) is operated backwards from the initial state determined by said phase-in information, and that the intermediately stored cipher text is called up from the intermediate memory (4) in the reverse direction and intermixed with the key pulse sequence generated by the coding/decoding generator (2) operating backwards, and is thereby decoded.

2. Process according to Claim 1, characterized in that the decoding with the coding/decoding generator (2) operating backwards is effected following the normal forward decoding of the cipher text portions received after the phase-in.

3. Process according to Claim 1, characterized in that the decoding with the coding/decoding generator (2) operating backwards is effected during the normal forward decoding.

4. Decoding process, wherein phase information contained in an inputted cipher text in spaced-apart time intervals is detected and a coding/decoding generator (2) is set to an initial state determined by said information and whereby, beginning with the detection without interference of the phase-in information, the cipher text is intermixed with a key pulse sequence generated by the coding/decoding generator (2) set in the afore-mentioned manner and thereby decoded, characterized in that the cipher text is intermediately stored from the beginning to at least the first secure detection of phase-in information, that from said phase-in information computing earlier phase-in information at the onset of the transmission of the message is effected, that the coding/decoding generator (2) is set to the initial state determined by said earlier phase-in information and operated from there on, and that the intermediately stored cipher text is then intermixed with the key pulse sequence generated by the coding/decoding generator (2) set in this manner, and is thereby deciphered.

5. Process according to Claim 4, characterized in that the entire cipher text is intermediately stored, until the earlier phase-in information is determined and the coding/decoding generator (2) is set accordingly.

6. Process according to Claim 4, characterized in that the decoding of the parts of the cipher text arriving prior to the phase-in is effected subsequently to the normal decoding of the cipher text parts arriving after the phase-in.

7. Decoding apparatus embodying the process according to one of Claims 1 to 3, with a cipher input (7), a synchronizing and input detector (1) connected to said input (7), a coding/decoding generator (2) with an associated coding key memory (5), a mixer (3) for mixing the cipher text with a key pulse sequence generated by the generator (2), a central function sequence control (6) connecting and controlling all of the afore-mentioned elements and a clear text output (8), wherein the coding/decoding generator (2) is settable to an initial state determined by the phase-in information recognized by a detector (1), characterized in that a memory (4) is provided for at least a part of the cipher text and that the coding/decoding generator (2) is capable of operating both forwardly and backwardly, and that the function sequence control (6) is further operable to call up the cipher text from the memory (4) in a sequence inverse to the sequence of the input storage, and to transmit the cipher text, together with the key pulse sequence generated by the coding/decoding generator (2) operating backwards, to the mixer (3).

8. Decoding apparatus emboying the process according to one of Claims 4 to 6, with a cipher text input (7), a synchronizing and input detector (1) connected to said input (7), a coding/decoding generator (2) with an associated coding key memory (5), a mixer (3) for mixing the cipher text with a key pulse sequence generated by the generator (2), a central function course control (6) connecting and controlling the afore-mentioned elements, and a clear text output (8), wherein the coding/decoding generator (2) is settable to an initial state determined by phase-in information recognized by the detector (1), characterized in that a memory (4) is provided for at least part of the cipher text, together with a phase-in information computer (9) for back-computing, from phase-in information recognized by the synchronizing and input detector (1), earlier phase-in information dependent on said phase-in information, and that the function sequence control (6) is operable to set the coding/decoding generator (2) to an initial state determined by said earlier phase-in information in order to intermix the cipher text intermediately stored in the memory (4) with the key pulse sequence generated by the generator (2) set in this manner, and to decipher it.

## Revendications

1. Procédé de déchiffrage, dans lequel on détecte à partir de la partie chiffrée introduite du côté entrée une information de phasage obtenue à intervalles temporels et on place un générateur de chiffrage/déchiffrage (2) dans un état initial déterminé par cette information, puis on soumet la partie chiffrée à un mélange avec une séquence d'impulsions codées produites à partir de la détection sans incident de l'information de phasage par le générateur de chiffrage/déchiffrage (2) ainsi conditionné et opérant vers l'avant et l'on déchiffre ainsi cette partie, procédé caractérisé en ce qu'on soumet la partie chiffrée à une mémorisation intermédiaire depuis le début et au moins jusqu'à la première détection sûre d'une information de phasage, en ce que le générateur de chiffrage/déchiffrage (2) fonctionne vers l'arrière à partir d'un état initial déterminé par cette information de phasage, et en ce qu'on extrait de la mémoire intermédiaire (4), en opérant en sens inverse, la partie chiffrée soumise à une mémorisation intermédiaire, on la mélange avec la séquence d'impulsions codées produites par le générateur de chiffrage/déchiffrage (2) opérant vers l'arrière, et l'on déchiffre ainsi cette partie chiffrée.

2. Procédé selon la revendication 1, caractérisé en ce qu'on effectue le déchiffrage au moyen du générateur de chiffrage/déchiffrage (2), opérant vers l'arrière, à la suite du déchiffrage normal vers l'avant des parties du message chiffré qui ont été reçues après le phasage.

3. Procédé selon la revendication 1, caractérisé en ce qu'on effectue le déchiffrage au moyen du générateur de chiffrage/déchiffrage (2), opérant vers l'arrière, pendant le déchiffrage normal effectué vers l'avant.

4. Procédé de déchiffrage dans lequel on détecte, à partir de la partie chiffrée introduite du côté entrée, une information de phasage obtenue à intervalles temporels et on place un générateur de chiffrage/déchiffrage (2) dans un état initial déterminé par cette information puis, à partir de la détection sans incident de l'information de phasage, on mélange la partie avec une séquence d'impulsions codées produites par le générateur de chiffrage/déchiffrage (2) ainsi conditionné et opérant vers l'avant, et l'on déchiffre ainsi cette partie, procédé caractérisé en ce qu'on soumet, depuis le début jusqu'à au moins une première détection sûre d'une information de phasage, la partie chiffrée à une mémorisation intermédiaire, en ce que, à partir de cette information de phasage, on détermine par le calcul une information précédente de phasage en remontant jusqu'au début de la transmission d'informations, en ce qu'on place le générateur de chiffrage/déchiffrage (2) dans l'état initial déterminé par cette information de phasage précédente et on le fait fonctionner à partir de cet état, et en ce qu'on soumet ensuite la partie chiffrée qui a été mise en mémorisation intermédiaire à un mélange avec la séquence d'impulsions codées produites par le générateur de chiffrage/déchiffrage (2) ainsi conditionné, et on la déchiffre ainsi.

5. Procédé selon la revendication 4, caractérisé en ce qu'on soumet la totalité du message chiffré à une mémorisation intermédiaire jusqu'à ce que l'information de phasage précédente soit déterminée et que le générateur de chiffrage/déchiffrage (2) soit conditionné en correspondance.

6. Procédé selon la revendication 4, caractérisé en ce qu'on effectue le déchiffrage des parties du message chiffré arrivant avant le phasage, en opérant à la suite du déchiffrage normal des parties du message chiffré arrivant après le phasage.

7. Dispositif de déchiffrage pour la mise en œuvre du procédé selon l'une des revendications 1 à 3, comportant une entrée de message chiffré (7), un détecteur de synchronisation et d'introduction (1) relié à cette entrée, un générateur de chiffrage/déchiffrage (2) auquel est associée une mémoire de code(s) de chiffrage (5), un mélangeur (3) du message chiffré avec une séquence d'impulsions codées produites par le générateur (2), une commande centrale de déroulement de fonction(s) 6 commandant et reliant toutes ces parties et une sortie de texte en clair (8), le générateur de chiffrage/déchiffrage (2) pouvant être placé dans un état initial déterminé par une information de phasage décelée par le détecteur (1), dispositif caractérisé en ce qu'une mémoire (4) est prévue pour au moins une partie du message chiffré, en ce que le générateur de chiffrage/déchiffrage (2) est conçu pour opérer aussi bien vers l'avant que vers l'arrière, et en ce que la commande de déroulement de fonction (6) est en outre agencée de manière que le message chiffré puisse être extrait de la mémoire (4) dans une séquence inverse de la séquence de mémorisation et puisse être introduite dans le mélangeur (3) en même temps que la séquence d'impulsions codées produites par le générateur de chiffrage/déchiffrage (2) opérant vers l'arrière.

8. Dispositif de déchiffrage pour la mise en œuvre du procédé selon l'une des revendications 4 à 6, comportant une entrée de message chiffré (7), un détecteur de synchronisation et d'introduction (1) relié à cette entrée, un générateur de chiffrage/déchiffrage (2) auquel est associée une mémoire de code(s) de chiffrage (5), un mélangeur (3) du message chiffré avec une séquence d'impulsions codées produites par le générateur (2), une commande centrale de déroulement de fonction(s) (6) commandant et reliant toutes ces parties et une sortie de texte en clair (8), le générateur de chiffrage/déchiffrage (2) pouvant être placé dans un état initial déterminé par une information de phasage décelée par le détecteur (1), dispositif caractérisé en ce qu'il est prévu une mémoire (4) pour au moins une partie du message chiffré, ainsi qu'un calculateur d'informations de phasage (9), ce dernier pouvant revenir par le calcul, à partir d'une information de phasage décelée par le détecteur de synchronisation et d'introduction (1), sur une information de phasage temporellement antérieure et dépendant de la première, et en ce que la commande de déroulement (6) est agencée de telle sorte que le générateur de chiffrage/déchiffrage (2) soit placé dans un état initial déterminé par cette information de phasage antérieure, pour assurer le mélange du message chiffré mémorisé de façon intermédiaire dans la mémoire (4) avec la séquence d'impulsions codées produites par le générateur (2) ainsi conditionné, et déchiffrer ainsi ce message.

**Fig.1**

**Fig.2**

**Fig. 3**